# EUROPÄISCHE PATENTSCHRIFT

(11) **EP 3 360 355 B1**
(45) Veröffentlichungstag und Bekanntmachung des Hinweises auf die Patenterteilung: **07.08.2019**
(21) Anmeldenummer: 16778206.9
(22) Anmeldetag: 06.10.2016
(51) Int. Cl.: H04W 8/20, H04W 8/18

(54) **BESCHRÄNKUNG DER ANZAHL WIE OFT EIN SUBSKRIPTIONS-PROFIL FÜR EINE EUICC HERUNTERGELADEN WERDEN KANN**
RESTRICTING THE NUMBER OF TIMES A SUBSCRIPTION PROFILE FOR AN EUICC CAN BE DOWNLOADED
LIMITATION DU NOMBRE DE TÉLÉCHARGEMENTS D'UN PROFIL D'ABONNÉ POUR UNE CARTE EUICC

(30) Priorität: 07.10.2015 DE 102015012941
(43) Veröffentlichungstag der Anmeldung: 15.08.2018
(73) Patentinhaber: Giesecke+Devrient Mobile Security GmbH, 81677 München (DE)
(72) Erfinder: NITSCH, Nils, 85570 Markt Schwaben (DE); HUBER, Ulrich, 81475 München (DE)
(86) Internationale Anmeldenummer: PCT/EP2016/001659
(87) Internationale Veröffentlichungsnummer: WO 2017/059957

(56) Entgegenhaltungen:
- WO-A1-2014/171707
- WO-A1-2014/184611
- DE-A1-102013 004 609
- US-A1- 2015 193 224
- US-B1- 9 088 457

## Beschreibung

### Gebiet der Erfindung

Die Erfindung betrifft ein Lade-Paket und ein Verfahren zum Laden eines Profils für eine Subskription (Subskriptions-Profils) in ein Teilnehmeridentitätsmodul.

### Stand der Technik

Mobile Endgeräte werden mittels Teilnehmeridentitätsmodulen, auch Secure Elements genannt, sicher in Funknetzwerken betrieben. Als mobile Endgeräte können insbesondere Mobilfunk-Endgeräte, wie z.B. Smartphones, sowie M2M-Endgeräte vorgesehen sein.

Im Rahmen des Einrichtens eines Teilnehmeridentitätsmoduls muss ein Subskriptions-Profil in das Teilnehmeridentitätsmodul geladen werden. Änderungswünsche am Subskriptions-Profil (oder auch kurz nur Profil) erfordern das Bereitstellen eines geänderten Subskriptions-Profils. Bei Plug-In-SIM-Karten für Mobilfunk-Endgeräte kann die Änderung durch Austausch der SIM-Karte durchgeführt werden. Alternativ wird ein neues Subskriptions-Profil in das Teilnehmeridentitätsmodul geladen, was besonders für festeingelötete Teilnehmeridentitätsmodule (z.B. eUICC im Mobilfunkbereich oder festeingelötetes M2M-Modul) durchgeführt wird, die nicht ohne Weiteres ausgetauscht werden können. Das Verwalten von Subskriptionen, insbesondere durch Herunterladen von Subskriptions-Profilen und begleitenden Daten in ein Teilnehmeridentitätsmodul, wird im Allgemeinen auch als Subscription Management bezeichnet.

Die technischen Spezifikationen [1] 12FAST.13 - Embedded SIM Remote Provisioning Architecture 17 December 2013", GSMA, und [2] SGP02-Remote-Provisioning-Architecture-for-Embedded-UICC-Technical-Specification-v2.0, 13 October 2014, GSMA, beschreiben das Herunterladen und Installieren eines Subskriptions-Profils in ein eUICC. Gemäß [1] 12FAST.13 sind am Laden eines Subskriptions-Profils in ein Teilnehmeridentitätsmodul eine Subscription Management Data Preparation SM-SP und ein Subscription Management Secure Router SM-SR beteiligt. Die Subscription Management Data Preparation SM-SP verfügt über Teilnehmeridentitätsmodul-spezifische Information und erzeugt hiermit ausgehend vom Subskriptions-Profil ein in das Teilnehmeridentitätsmodul zu ladendes Lade-Paket. Das Lade-Paket umfasst eine für das Teilnehmeridentitätsmodul spezifische verschlüsselte Lade-Sequenz, die dem Subskriptions-Profil entspricht, und ausgehend von der sich das Subskriptions-Profil im Teilnehmeridentitätsmodul implementieren lässt. Die Subscription Management Data Preparation SM-SP stellt das Lade-Paket an den Subscription Management Secure Router SM-SR bereit, der das Lade-Paket in das Teilnehmeridentitätsmodul lädt. Durch Implementierungsvorgänge im Teilnehmeridentitätsmodul, die im Zusammenhang mit der Erfindung nicht von Bedeutung sind und deshalb nicht weiter betrachtet werden, wird das Subskriptions-Profil schließlich im Teilnehmeridentitätsmodul implementiert. [2] SGP02, Kap. 3 beschreibt den protokollarischen Ablauf beim Herunterladen und Installieren eines Subskriptions-Profils in ein eUICC. Die Subscription Management Data Preparation SM-SP wird im Folgenden deutsch Daten-Aufbereitungsserver SM-DP genannt, der Subscription Management Secure Router SM-SR deutsch Sicherheits-Router SM-SR.

Um ein Laden des Lade-Pakets in mehrere unterschiedliche Teilnehmeridentitätsmodule zu verhindern, also um ein Klonen eines Subskriptions-Profils zur Nutzung in mehreren Teilnehmeridentitätsmodulen zu verhindern, ist die im Lade-Paket enthaltene Lade-Sequenz Teilnehmeridentitätsmodulspezifisch verschlüsselt.

Durch diese Maßnahme kann allerdings nicht verhindert werden, dass ein Lade-Paket mehrmals in ein und dasselbe Teilnehmeridentitätsmodul geladen und dort installiert wird. Warum diese auf den ersten Blick harmlose Maßnahme, ein Lade-Paket mehrmals in ein und dasselbe Teilnehmeridentitätsmodul zu laden, problematisch sein kann, wird nachfolgend aufgezeigt. Nutzungsverträge für Subskriptions-Profile können durch den Netzbetreiber zeitlich befristet sein. Um die zeitliche Befristung durchzusetzen, kann vorgesehen sein, dass anlässlich des Vertragsablaufs der Netzbetreiber das im Teilnehmeridentitätsmodul implementierte Subskriptions-Profil per Remote-Zugriff im Teilnehmeridentitätsmodul deaktiviert. Ein Nutzer könnte versuchen, die zeitliche Befristung des Nutzungsvertrags auszuhebeln, indem er nach der Remote-Deaktivierung erneut beantragt, das Lade-Paket solle in das Teilnehmeridentitätsmodul geladen werden, unter der Vorgabe, er hätte das Profil noch gar nicht erhalten.

### Zusammenfassung der Erfindung

Der Erfindung liegt die Aufgabe zu Grunde, ein Lade-Paket und ein Verfahren zum Laden eines Profils für eine Mobilfunk-Subskription (Subskriptions-Profils) in ein Teilnehmeridentitätsmodul zu schaffen, bei welchem ein Aushebeln von Nutzungsbeschränkungen, insbesondere zeitlichen Befristungen, erschwert oder vorzugsweise verhindert ist. Insbesondere soll ein mehrmaliges Laden eines Subskriptions-Profils in ein Teilnehmeridentitätsmodul verhindert werden.

Die Aufgabe wird gelöst durch ein Lade-Paket nach Anspruch 1. Vorteilhafte Ausgestaltungen der Erfindung sind in den abhängigen Ansprüchen angegeben.

Das erfindungsgemäße Lade-Paket ist eingerichtet zum Laden eines Profils für eine Subskription in ein Teilnehmeridentitätsmodul und umfasst eine Lade-Sequenz, durch deren Implementieren im Teilnehmeridentitätsmodul das Profil im Teilnehmeridentitätsmodul angelegt wird. Das Lade-Paket ist gekennzeichnet durch eine Profil-Lade-Zähler-Sequenz. Diese ist ausgehend von einem Zählerstand eines bei einem Daten-Aufbereitungsserver geführten Profil-Lade-Zähler erstellt, der anlässlich jedes Übertragens des Lade-Pakets vom Daten-Aufbereitungsserver an das Teilnehmeridentitätsmodul um einen Zählschritt hochgezählt wird. Weiter ist die Profil-Lade-Zähler-Sequenz eingerichtet, in das Teilnehmeridentitätsmodul einen Profil-Lade-Zähler mit dem erstellten Zählerstand zu laden. Die Profil-Lade-Zähler-Sequenz für den Zähler wird vor der Lade-Sequenz für das Profil in das Teilnehmeridentitätsmodul geladen, also aus dem übermittelten Lade-Paket extrahiert.

Falls im Teilnehmeridentitätsmodul kein implementierter Profil-Lade-Zähler vorhanden ist, wird der Profil-Lade-Zähler im Teilnehmeridentitätsmodul mit einem Zählerstand implementiert, der eine zulässige Anzahl von Malen festlegt, welche das Lade-Paket in das Teilnehmeridentitätsmodul geladen werden darf. Falls im Teilnehmeridentitätsmodul bereits ein implementierter Profil-Lade-Zähler vorhanden ist, wird dessen Zählerstand daraufhin überprüft, ob gemäß dem Zählerstand im Teilnehmeridentitätsmodul eine zulässige Anzahl von Malen, welche das Lade-Paket bereits in das Teilnehmeridentitätsmodul geladen oder / und implementiert worden ist, noch unterschritten ist. Das Laden oder /und Implementieren der Lade-Sequenz, also letztlich des Profils, wird nur höchstens zugelassen, falls die zulässige Anzahl noch unterschritten ist, und andernfalls wird das Laden oder / und Implementieren der Lade-Sequenz (PL) verhindert.

Durch den im Lade-Paket selbst angelegten Lade-Zähler wird die Möglichkeit eröffnet, die Zulässigkeit des Profil-Lade-Vorgangs an Hand des Lade-Pakets selbst zu überprüfen. Bei erstmaligem Laden eines Profils wird im Teilnehmeridentitätsmodul der Profil-Lade-Zähler angelegt und mit der zulässigen Höchstzahl (Anzahl) Implementier-Vorgänge für dasselbe Profil angelegt. Bei jedem weiteren Laden desselben Profils wird beim Daten-Aufbereitungs-Server der Profil-Lade-Zähler um einen Zählschritt hochgezählt. Wird dabei, anlässlich eines Profil-Lade-Vorgangs, die im Teilnehmeridentitätsmodul implementierte Höchstzahl für den Zählerstand überschritten, wird bei diesem Profil-Lade-Vorgang das Lade-Paket nicht aus dem Lade-Paket extrahiert (also nicht heraus geladen) und folglich nicht im Teilnehmeridentitätsmodul implementiert, oder zwar extrahiert (geladen) aber nicht implementiert.

Wahlweise stellt das Teilnehmeridentitätsmodul einen Profil-Lade-Zähler bereit, der einem einzelnen Profil zugeordnet ist.

Wahlweise, stellt das Teilnehmeridentitätsmodul, alternativ oder zusätzlich, einen globalen Profil-Lade-Zähler bereit, der alle Profil-Ladevorgänge zählt, insbesondere auch für unterschiedliche Profile.

Somit ist gemäß Anspruch 1 ein Lade-Paket geschaffen, bei welchem ein Aushebeln von Nutzungsbeschränkungen, verhindert ist.

Das Überprüfen des Zählerstandes erfolgt genauer, indem der Zählerstand des im Teilnehmeridentitätsmodul implementierten Profil-Lade-Zählers mit dem Zählerstand aus dem Lade-Paket verglichen wird.

Wahlweise ist im Lade-Paket die Profil-Lade-Zähler-Sequenz der Lade-Sequenz vorangestellt, so dass das Teilnehmeridentitätsmodul die Profil-Lade-Zähler-Sequenz vor der Lade-Sequenz aus dem Lade-Paket heraus laden oder extrahieren muss.

Ein erfindungsgemäßer Daten-Aufbereitungs-Server ist eingerichtet, ein zum Übertragen an ein Teilnehmeridentitätsmodul bereitgestelltes Lade-Paket zu erstellen.

Wahlweise verschlüsselt der Daten-Aufbereitungs-Server das erstellte Lade-Paket mit einem für das Teilnehmeridentitätsmodul spezifischen Schlüssel und überträgt das verschlüsselte Lade-Paket an das Teilnehmeridentitätsmodul. Im Teilnehmeridentitätsmodul wird das Lade-Paket entschlüsselt.

### Kurze Beschreibung der Zeichnungen

Im Folgenden wird die Erfindung an Hand von Ausführungsbeispielen und unter Bezugnahme auf die Zeichnungen näher erläutert, in der zeigen:
- Fig. 1: ein Schaubild zum erstmaligen Laden eines Lade-Pakets von einem Daten-Aufbereitungsserver über einen Sicherheits-Router in ein Teilnehmeridentitätsmodul, gemäß einer Ausführungsform der Erfindung;
- Fig. 2: ein zu Fig. 1 analoges Schaubild für den Versuch des Sicherheits-Routers, das Lade-Paket ein zweites Mal in das Teilnehmeridentitätsmodul zu laden.

### Detaillierte Beschreibung von Ausführungsbeispielen

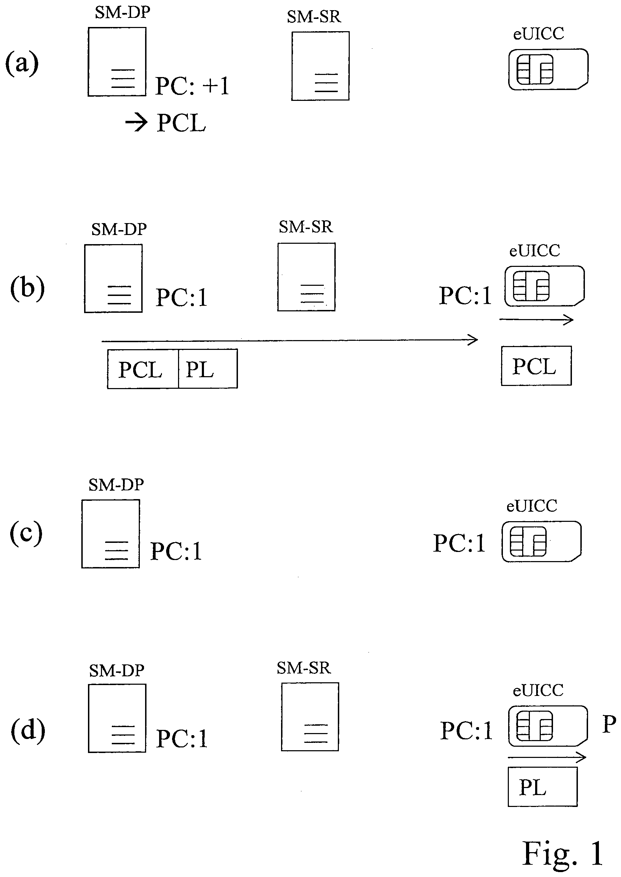

Fig. 1 zeigt ein Schaubild zum erstmaligen Laden eines Lade-Pakets von einem Daten-Aufbereitungsserver SM-DP in ein Teilnehmeridentitätsmodul eUICC, gemäß einer Ausführungsform der Erfindung. Das Lade-Paket umfasst eine Lade-Sequenz PL zum Implementieren eines Subskriptionsprofil P und eine Profil-Lade-Zähler-Sequenz PCL zum Implementieren eines Profil-Lade-Zählers PC, jeweils im Teilnehmeridentitätsmodul eUICC. In einem Schritt (a) erstellt der Daten-Aufbereitungsserver SM-DP das Lade-Paket aus einer Lade-Sequenz PL und einer Profil-Lade-Zähler-Sequenz PCL. Die Lade-Sequenz PL wird ausgehend von zu ladenden Profildaten P erzeugt. Die Profil-Lade-Zähler-Sequenz PCL wird ausgehend vom Zählerstand eines Profil-Lade-Zählers PC erstellt, der um einen Zählschritt hochgezählt wird, im vorliegenden Fall des erstmaligen Ladens auf den Zählerstand eins. Aus Lade-Sequenz PL und einer Profil-Lade-Zähler-Sequenz PCL wird das Lade-Paket erstellt und mit einem für das Teilnehmeridentitätsmodul eUICC spezifischen Schlüssel verschlüsselt. (b) Das verschlüsselte Lade-Paket wird vom Datenaufbereitungs-Server SM-DP über einen Sicherheits-Router SM-SR an das Teilnehmeridentitätsmodul eUICC übermittelt. Das Teilnehmeridentitätsmodul eUICC entschlüsselt das Lade-Paket. Im Lade-Paket ist die Profil-Lade-Zähler-Sequenz PCL der Lade-Sequenz PL für das Profil P vorangestellt. Daher kann das Teilnehmeridentitätsmodul eUICC nur zuerst die Profil-Lade-Zähler-Sequenz PCL aus dem entschlüsselten Lade-Paket heraus in das Teilnehmeridentitätsmodul laden. In einem Schritt (c) wird daraufhin im Teilnehmeridentitätsmodul festgestellt, dass dort noch kein Profil-Lade-Zähler PC implementiert ist und der Profil-Lade-Zähler wird im Teilnehmeridentitätsmodul eUICC neu implementiert, einschließlich des Zählerstandes, hier also eins, was hier zugleich die höchstens zulässige Anzahl von Malen ist, die das Profil im Teilnehmeridentitätsmodul eUICC implementiert werden darf. In einem Schritt (d) lädt das Teilnehmeridentitätsmodul eUICC nun die Lade-Sequenz PL für das Profil aus dem Lade-Paket heraus in das Teilnehmeridentitätsmodul eUICC und implementiert im Teilnehmeridentitätsmodul eUICC das Profil P ausgehend von der geladenen Lade-Sequenz PL.

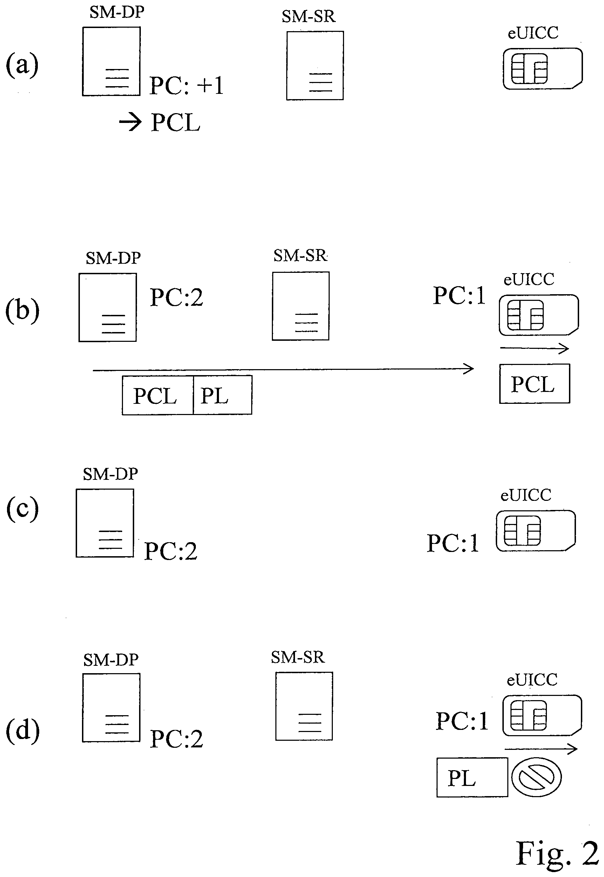

Fig. 2 zeigt ein zu Fig. 1 analoges Schaubild für den Versuch des Daten-Aufbereitungsservers SM-DP, das Lade-Paket ein zweites Mal in das Teilnehmeridentitätsmodul eUICC zu laden. Der Daten-Aufbereitungsserver SM-DP beginnt mit dem Erstellen des Lade-Pakets und stellt die Profil-Lade-Sequenz bereit. (a) Hierfür zählt der Daten-Aufbereitungsserver SM-DP den Zählerstand des Profil-Lade-Zählers PC um einen Zählschritt hoch von eins auf zwei und erstellt auf Grundlage dieses Zählerstandes die Profil-Lade-Zähler-Sequenz PCL. Der Daten-Aufbereitungsserver SM-DP konkateniert die Profil-Lade-Sequenz PL und die Profil-Lade-Zähler-Sequenz PCL in das Lade-Paket und verschlüsselt das Lade-Paket mit dem für das Teilnehmeridentitätsmodul eUICC spezifischem Schlüssel. (b) Das verschlüsselte Lade-Paket wird vom Datenaufbereitungs-Server SM-DP über einen Sicherheits-Router SM-SR an das Teilnehmeridentitätsmodul eUICC übermittelt. Das Teilnehmeridentitätsmodul eUICC entschlüsselt das Lade-Paket und extrahiert die Profil-Lade-Zähler-Sequenz PCL, mit Zählerstand zwei. (c) Das Teilnehmeridentitätsmodul eUICC stellt fest, dass es schon einen implementierten Profil-Lade-Zähler PC hat und prüft den Zählerstand aus dem Lade-Paket, also zwei, gegenüber dem Zählerstand des im Teilnehmeridentitätsmodul eUICC implementierten Profil-Lade-Zählers PC, also eins. Somit übersteigt der Zählerstand die zulässige Anzahl ImplementierungsVorgänge des Profils P. In einem Schritt (d) wird folglich verhindert, dass die Lade-Sequenz PL ein zweites Mal in das Teilnehmeridentitätsmodul eUICC extrahiert (geladen) und implementiert wird.

Wahlweise sind bei dem Verfahren weiter Maßnahmen vorgesehen, um zu verhindern, dass eine unberechtigte Datenquelle ein Lade-Paket an das Teilnehmeridentitätsmodul sendet. Wahlweise wird dadurch verhindert, dass ein Lade-Paket zwischengespeichert und unverändert wieder in das Teilnehmeridentitätsmodul eingespielt wird.

Wahlweise wird hierbei durch den Daten-Aufbereitungs-Server dem, ggf. verschlüsselten, Lade-Paket ein für den Daten-Aufbereitungs-Server spezifisches Verifizierungs-Token beigefügt, welches nach dem Übermitteln des Lade-Pakets an das Teilnehmeridentitätsmodul beim Teilnehmeridentitätsmodul verifiziert wird. Das Lade-Paket wird nur bei erfolgreicher Verifizierung des Verifizierungs-Token beim Teilnehmeridentitätsmodul akzeptiert. Andernfalls wird die Profil-Zähler-Lade-Sequenz oder /und die Lade-Sequenz aus dem Lade-Paket nicht geladen oder / und nicht implementiert.

Wahlweise ist als Verifizierungs-Token eine Prüfsumme vorgesehen, insbesondere Message Authentication Code MAC, oder alternativ ein Zertifikat.

### Zitierter Stand der Technik

[1] 12FAST.13 - Embedded SIM Remote Provisioning Architecture 17 December 2013, GSMA
[2] SGP02-Remote-Provisioning-Architecture-for-Embedded-UICC-Technical-Specification-v2.0, 13 October 2014, GSMA

## Patentansprüche

1. Lade-Paket, welches dazu eingerichtet ist um von einem Daten-Aufbereitungs-Server (SM-DP) an ein Teilnehmeridentitätsmodul (eUICC) übertragen zu werden um dort eine begrenzte Anzahl von Malen ein Profil (P) für eine Subskription zu laden, und umfassend:
eine Lade-Sequenz (PL), durch deren Implementieren im Teilnehmeridentitätsmodul (eUICC) das Profil (P) im Teilnehmeridentitätsmodul (eUICC) angelegt wird, **gekennzeichnet durch:**
- eine Profil-Lade-Zähler-Sequenz (PCL),
-- die, vor dem Übertragen des Lade-Pakets, ausgehend von einem Zählerstand eines bei einem Daten-Aufbereitungsserver (SM-DP) geführten Profil-Lade-Zählers (PC) erstellt wird, der anlässlich eines Übertragens des Lade-Pakets vom Daten-Aufbereitungsserver (SM-DP) an das Teilnehmeridentitätsmodul (eUICC) um einem Zählschritt nach oben verändert wird,
-- die, nach dem Übertragen des Lade-Pakets aber vor der Lade-Sequenz (PL) in das Teilnehmeridentitätsmodul geladen wird, und
-- die dazu eingerichtet ist:
- in dem Teilnehmeridentitätsmodul:
--- falls im Teilnehmeridentitätsmodul kein implementierter Profil-Lade-Zähler (PC) vorhanden ist, in das Teilnehmeridentitätsmodul (eUICC) einen Profil-Lade-Zähler (PC) mit dem erstellten Zählerstand zu laden, und den Profil-Lade-Zähler (PC) im Teilnehmeridentitätsmodul mit einem Zählerstand zu implementieren, der eine zulässige Anzahl von Malen festlegt, welche das Lade-Paket in das Teilnehmeridentitätsmodul geladen werden darf;
--- und falls im Teilnehmeridentitätsmodul bereits ein implementierter Profil-Lade-Zähler (PC) vorhanden ist, den Zählerstand des im Teilnehmeridentitätsmodul (eUICC) implementierten Profil-Lade-Zählers (PC) mit dem Zählerstand aus dem Lade-Paket als Vergleichs-Zählerstand zu vergleichen, um den Zählerstand aus dem Lade-Paket daraufhin zu überprüfen, ob der Zählerstand im Teilnehmeridentitätsmodul noch unterschritten ist, und das Laden oder /und Implementieren der Lade-Sequenz (PL) nur zuzulassen, falls die zulässige Anzahl noch unterschritten ist, und andernfalls das Laden oder /und Implementieren der Lade-Sequenz (PL) zu verhindern.

2. Lade-Paket nach Anspruch 1, wobei im Lade-Paket die Profil-Lade-Zähler-Sequenz (PCL) der Lade-Sequenz (PL) vorangestellt ist, so dass die Profil-Lade-Zähler-Sequenz (PCL) vor der Lade-Sequenz (PL) geladen werden muss.

3. Daten-Aufbereitungs-Server (SM-DP), eingerichtet ein zum Übertragen an ein Teilnehmeridentitätsmodul (eUICC) vorgesehenes Lade-Paket nach einem der Ansprüche 1 bis 2 zu erstellen und an das Teilnehmeridentitätsmodul zu übertragen.

4. Verfahren zum Laden eines Lade-Pakets von einem Daten-Aufbereitungs-Server (SM-DP) in ein Teilnehmeridentitätsmodul (eUICC), das Lade-Paket umfassend eine Lade-Sequenz (PL), durch deren Implementieren im Teilnehmeridentitätsmodul (eUICC) das Profil (P) im Teilnehmeridentitätsmodul (eUICC) angelegt wird, **gekennzeichnet durch** eine Profil-Lade-Zähler-Sequenz (PCL); das Verfahren **gekennzeichnet durch** die Schritte:
- bei dem Daten-Aufbereitungsserver (SM-DP):
-- Erstellen der Lade-Sequenz (PL) für das Profil (P);
-- Verändern eines Zählerstandes eines Profil-Lade-Zähler (PC) für das Profil um einen Zählschritt nach oben und Erstellen der Profil-Lade-Zähler-Sequenz (PCL) ausgehend vom veränderten Zählerstand;
-- Erstellen eines Lade-Pakets umfassend die erstellte Lade-Sequenz (PL) und die Profil-Lade-Zähler-Sequenz (PCL) für den veränderten Zählerstand;
- Übertragen des Lade-Pakets vom Daten-Aufbereitungs-Server (SM-DP) an das Teilnehmeridentitätsmodul (eUICC);
- bei dem Teilnehmeridentitätsmodul:
- vor dem Laden der Lade-Sequenz (PL) aus dem Lade-Paket, Laden der Profil-Lade-Zähler-Sequenz (PCL) aus dem Lade-Paket in das Teilnehmeridentitätsmodul (eUICC);
- falls im Teilnehmeridentitätsmodul kein implementierter Profil-Lade-Zähler (PC) vorhanden ist, mittels der Profil-Lade-Zähler-Sequenz (PCL) Implementieren des Profil-Lade-Zählers (PC) im Teilnehmeridentitätsmodul mit einem Zählerstand, der eine zulässige Anzahl von Malen festlegt, welche das Lade-Paket (PL) in das Teilnehmeridentitätsmodul geladen werden darf;
- oder falls im Teilnehmeridentitätsmodul bereits ein implementierter Profil-Lade-Zähler (PC) vorhanden ist, **dadurch, dass** der Zählerstand des im Teilnehmeridentitätsmodul implementierten Profil-Lade-Zählers (PC) mit dem Zählerstand aus dem Lade-Paket als Vergleichs-Zählerstand verglichen wird, Überprüfen, ob der Zählerstand im Teilnehmeridentitätsmodul (eUICC) noch unterschritten ist, und falls die zulässige Anzahl noch unterschritten ist Laden oder/und Implementieren der Lade-Sequenz (PL), und andernfalls Verhindern des Ladens oder /und Implementierens der Lade-Sequenz (PL).

5. Verfahren nach Anspruch 4, wobei das Lade-Paket vom Daten-Aufbereitungs-Server (SM-DP) über einen Sicherheits-Router (SM-SR) an das Teilnehmeridentitätsmodul (eUICC) übertragen wird, wobei der Sicherheits-Router (SM-SR) keine Zugriffsmöglichkeit auf den Profil-Lade-Zähler (PC) hat.

6. Verfahren nach einem der Ansprüche 4 bis 5, wobei:
das Verfahren den weiteren Schritt des Verschlüsselns des erstellten Lade-Pakets mit einem für das Teilnehmeridentitätsmodul (eUICC) spezifischen Schlüssel umfasst;
das Übertragen des Lade-Pakets als Übertragen des verschlüsselten Lade-Pakets gestaltet ist; und
das Verfahren im Teilnehmeridentitätsmodul (eUICC) den Schritt des Entschlüsselns des verschlüsselten Lade-Pakets umfasst.

7. Verfahren nach einem der Ansprüche 4 bis 6, wobei durch den Daten-Aufbereitungs-Server (SM-DP) dem, ggf. verschlüsselten, Lade-Paket ein für den Daten-Aufbereitungs-Server (SM-DP) spezifisches Verifizierungs-Token beigefügt wird, welches nach dem Übermitteln des Lade-Pakets an das Teilnehmeridentitätsmodul (eUICC) beim Teilnehmeridentitätsmodul (eUICC) verifiziert wird, und wobei das Lade-Paket nur bei erfolgreicher Verifizierung des Verifizierungs-Token beim Teilnehmeridentitätsmodul (eUICC) akzeptiert wird, und andernfalls die Profil-Zähler-Lade-Sequenz (PCL) oder /und die Lade-Sequenz aus dem Lade-Paket nicht geladen oder / und nicht implementiert wird.

8. Verfahren nach Anspruch 7, wobei als Verifizierungs-Token eine Prüfsumme, insbesondere Message Authentication Code (MAC), oder ein Zertifikat vorgesehen ist.

## Claims

1. A loading package adapted to be transferred from a data preparation server (SM-DP) to a subscriber identity module (eUICC) in order to load there, for a limited number of times, a profile (P) for a subscription, and comprising:
a loading sequence (PL) through implementing of which in the subscriber identity module (eUICC) the profile (P) is set up in the subscriber identity module (eUICC), **characterized by**:
- a profile loading counter sequence (PCL),
-- which, prior to transferring the loading package, is generated on the basis of a counter reading of a profile loading counter (PC) maintained at a data preparation server (SM-DP), said profile loading counter being incremented by one counting step on the occasion of a transfer of the loading package from the data preparation server (SM-DP) to the subscriber identity module (eUICC),
-- which is loaded into the subscriber identity module after transferring the loading package, but prior to the loading sequence (PL), and
-- which is further adapted:
- in the subscriber identity module:
--- if no implemented profile loading counter (PC) is present in the subscriber identity module, to load a profile loading counter (PC) with the generated counter reading into the subscriber identity module (eUICC), and to implement the profile loading counter (PC) in the subscriber identity module with a counter reading which determines an admissible number of times which the loading package may be loaded into the subscriber identity module;
--- and if an implemented profile loading counter (PC) is already present in the subscriber identity module, to compare the counter reading of the profile loading counter (PC) implemented in the subscriber identity module (eUICC) with the counter reading from the loading package as the comparative counter reading, in order to check the counter reading from the loading package for whether the counter reading in the subscriber identity module is still undershot, and to allow the loading or/and implementing of the loading sequence (PL) only if the admissible number is still undershot, and otherwise to prevent the loading or/and implementing of the loading sequence (PL).

2. The loading package according to claim 1, wherein the profile loading counter sequence (PCL) precedes the loading sequence (PL) in the loading package, so that the profile loading counter sequence (PCL) has to be loaded before the loading sequence (PL).

3. A data preparation server (SM-DP), adapted to generate a loading package according to either of claims 1 to 2 for transfer to a subscriber identity module (eUICC) and to transfer it to the subscriber identity module (eUICC).

4. A method for loading a loading package from a data preparation server (SM-DP) into a subscriber identity module (eUICC), the loading package comprising a loading sequence (PL), through implementing of which in the subscriber identity module (eUICC) the profile (P) is set up in the subscriber identity module (eUICC), **characterized by** a profile loading counter sequence (PCL); the method **characterized by** the steps of:
- at the data preparation server (SM-DP):
-- generating the loading sequence (PL) for the profile (P);
-- modifying by one counting step a counter reading of a profile loading counter (PC) for the profile and generating the profile loading counter sequence (PCL) on the basis of the modified counter reading;
-- generating a loading package comprising the generated loading sequence (PL) and the profile loading counter sequence (PCL) for the changed counter reading;
- transferring the loading package from the data preparation server (SM-DP) to the subscriber identity module (eUICC);
- at the subscriber identity module:
- prior to loading the loading sequence (PL) from the loading package, loading the profile loading counter sequence (PCL) from the loading package into the subscriber identity module (eUICC);
- if no implemented profile loading counter (PC) is present in the subscriber identity module, implementing, by means of the profile loading counter sequence (PLC), the profile-loading counter (PC) in the subscriber identity module with a counter reading which determines an admissible number of times which the loading package (PL) may be loaded into the subscriber identity module;
- or, if an implemented profile loading counter (PC) is already present in the subscriber identity module, through comparing the counter reading of the profile loading counter (PC) implemented in the subscriber identity module with the counter reading from the loading package as the comparative counter reading, checking for whether the counter reading in the subscriber identity module (eUICC) is still undershot and, if the admissible number is still undershot, loading or/and implementing the loading sequence (PL), and otherwise preventing the loading or/and implementing of the loading sequence (PL).

5. The method according to claim 4, wherein the loading package is transferred from the data preparation server (SM-DP) via a security router (SM-SR) to the subscriber identity module (eUICC), wherein the security router (SM-SR) has no possibility to access the profile loading counter (PC).

6. The method according to either of claims 4 to 5, wherein:
the method comprises the further step of encrypting the generated loading package with a key specific to the subscriber identity module (eUICC);
the transfer of the loading package is configured as a transfer of the encrypted loading package; and
the method in the subscriber identity module (eUICC) comprises the step of decrypting the encrypted loading package.

7. The method according to any of claims 4 to 6, wherein the data preparation server (SM-DP) adds a verification token specific to the data preparation server (SM-DP) to the, optionally encrypted, loading package, said token being verified at the subscriber identity module (eUICC) after the transmission of the loading package to the subscriber identity module (eUICC), and wherein the loading package is accepted at the subscriber identity module (eUICC) only upon successful verification of the verification token, and otherwise the profile counter loading sequence (PCL) or/and the loading sequence from the loading package is not loaded or/and not implemented.

8. The method according to claim 7, wherein as the verification token, a checksum, in particular a message authentication code (MAC), or a certificate is provided.

## Revendications

1. Paquet de chargement conçu pour être transféré d'un serveur de conditionnement de données (SM-DP) à un module d'identité d'abonné (eUICC) afin d'y charger un nombre limité de fois un profil (P) pour un abonnement, et comprenant :
une séquence de chargement (PL) par la mise en oeuvre de laquelle dans le module d'identité d'abonné (eUICC) le profil (P) est créé dans le module d'identité d'abonné (eUICC), **caractérisé par** :
- une séquence de compteur de chargements de profil (PCL),
- laquelle, aprés le transfert du paquet de chargement, est générée à partir d'une valeur de compteur d'un compteur de chargements de profil (PC) entretenu à un serveur de conditionnement de données (SM-DP) qui, à l'occasion d'un transfert du paquet de chargement du serveur de conditionnement de données (SM-DP) au module d'identité d'abonné (eUICC), est modifié d'un pas d'incrémentation vers le haut,
- laquelle, avant le transfert du paquet de chargement mais avant la séquence de chargement (PL), est chargée dans le module d'identité d'abonné, et
- laquelle est conçue pour :
- dans le module d'identité d'abonné :
- dans le cas où, dans le module d'identité d'abonné, il n'y a pas de compteur de chargements de profil (PC) mis en oeuvre, charger dans le module d'identité d'abonné (eUICC) un compteur de chargements de profil (PC) ayant la valeur de compteur générée, et mettre en oeuvre le compteur de chargements de profil (PC) dans le module d'identité d'abonné avec une valeur de compteur qui fixe un nombre admissible de fois que le paquet de chargement est autorisé à être chargé dans le module d'identité d'abonné ;
- et dans le cas où, dans le module d'identité d'abonné, il y a déjà un compteur de chargements de profil (PC) mis en oeuvre, comparer la valeur de compteur du compteur de chargements de profil (PC) mis en oeuvre dans le module d'identité d'abonné (eUICC) avec la valeur de compteur du paquet de chargement en tant que valeur de compteur de comparaison afin de vérifier la valeur de compteur du paquet de chargement pour savoir si la valeur de compteur figurant dans le module d'identité d'abonné y est encore inférieure, et ne permettre le chargement ou/et la mise en oeuvre de la séquence de chargement (PL) que si le nombre admissible est encore inférieur, et, sinon, empêcher le chargement ou/et la mise en oeuvre de la séquence de chargement (PL) .

2. Paquet de chargement selon la revendication 1, cependant que, dans le paquet de chargement, la séquence de compteur de chargements de profil (PCL) de la séquence de chargement (PL) est placée en avant, de telle sorte que la séquence de compteur de chargements de profil (PCL) doit être chargée avant la séquence de chargement (PL).

3. Serveur de conditionnement de données (SM-DP) conçu pour générer un paquet de chargement selon une des revendications de 1 à 2 prévu pour le transfert à un module d'identité d'abonné (eUICC) et le transférer au module d'identité d'abonné.

4. Procédé de chargement d'un paquet de chargement depuis un serveur de conditionnement de données (SM-DP) dans un module d'identité d'abonné (eUICC), le paquet de chargement comprenant une séquence de chargement (PL) par la mise en oeuvre de laquelle dans le module d'identité d'abonné (eUICC) le profil (P) est créé dans le module d'identité d'abonné (eUICC), **caractérisé par** une séquence de compteur de chargements de profil (PCL) ; le procédé étant **caractérisé par** les étapes :
- au serveur de conditionnement de données (SM-DP) :
- génération de la séquence de chargement (PL) pour le profil (P) ;
- modification d'un pas d'incrémentation vers le haut d'une valeur de compteur d'un compteur de chargements de profil (PC) pour le profil, et génération de la séquence de compteur de chargements de profil (PCL) à partir de la valeur de compteur modifiée ;
- génération d'un paquet de chargement comprenant la séquence de chargement (PL) générée et la séquence de compteur de chargements de profil (PCL) pour la valeur de compteur modifiée ;
- transfert du paquet de chargement du serveur de conditionnement de données (SM-DP) au module d'identité d'abonné (eUICC) ;
- dans le module d'identité d'abonné :
- avant le chargement de la séquence de chargement (PL) depuis le paquet de chargement, chargement de la séquence de compteur de chargements de profil (PCL) depuis le paquet de chargement dans le module d'identité d'abonné (eUICC) ;
- dans le cas où, dans le module d'identité d'abonné, il n'y a pas de compteur de chargements de profil (PC) mis en oeuvre, mise en oeuvre, au moyen de la séquence de compteur de chargements de profil (PCL), du compteur de chargements de profil (PC) dans le module d'identité d'abonné, avec une valeur de compteur qui fixe un nombre admissible de fois que le paquet de chargement (PL) est autorisé à être chargé dans le module d'identité d'abonné ;
- ou, dans le cas où, dans le module d'identité d'abonné, il y a déjà un compteur de chargements de profil (PC) mis en oeuvre, au moyen de ce que la valeur de compteur du compteur de chargements de profil (PC) mis en oeuvre dans le module d'identité d'abonné est comparée avec la valeur de compteur du paquet de chargement en tant que valeur de compteur de comparaison, vérification pour savoir si la valeur de compteur figurant dans le module d'identité d'abonné (eUICC) y est encore inférieure, et, si le nombre admissible est encore inférieur, chargement ou/et mise en oeuvre de la séquence de chargement (PL), et, sinon, empêchement du chargement ou/et de la mise en oeuvre de la séquence de chargement (PL).

5. Procédé selon la revendication 4, cependant que le paquet de chargement est transféré du serveur de conditionnement de données (SM-DP) au module d'identité d'abonné (eUICC) par l'intermédiaire d'un routeur de sécurité (SM-SR), cependant que le routeur de sécurité (SM-SR) n'a pas de possibilité d'accès au compteur de chargements de profil (PC).

6. Procédé selon une des revendications de 4 à 5, cependant que :
le procédé comprend l'autre étape du cryptage du paquet de chargement généré, avec une clé spécifique du module d'identité d'abonné (eUICC) ;
le transfert du paquet de chargement est réalisé sous forme de transfert du paquet de chargement crypté ; et
le procédé comprend, dans le module d'identité d'abonné (eUICC), l'étape du décryptage du paquet de chargement crypté.

7. Procédé selon une des revendications de 4 à 6, cependant que, par le serveur de conditionnement de données (SM-DP), au paquet de chargement éventuellement crypté, un jeton de vérification spécifique du serveur de conditionnement de données (SM-DP) est adjoint, lequel, après le transfert du paquet de chargement au module d'identité d'abonné (eUICC), est vérifié au module d'identité d'abonné (eUICC), et cependant que le paquet de chargement n'est accepté qu'en cas de vérification aboutie du jeton de vérification au module d'identité d'abonné (eUICC), et que, sinon, la séquence de compteur de chargements de profil (PCL) ou/et la séquence de chargement du paquet de chargement n'est pas chargée ou/et n'est pas mise en oeuvre.

8. Procédé selon la revendication 7, cependant que, en tant que jeton de vérification, une somme de vérification, en particulier Message Authentication Code (MAC) ou un certificat est prévu(e).
